# EUROPÄISCHE PATENTSCHRIFT

(11) **EP 2 596 566 B1**
(45) Veröffentlichungstag und Bekanntmachung des Hinweises auf die Patenterteilung: **16.07.2014**
(21) Anmeldenummer: 11720811.6
(22) Anmeldetag: 24.05.2011
(51) Int. Cl.: H02K 1/14, H02K 3/52, H02K 3/32

(54) **ELEKTROMOTOR MIT EINEM SEGMENTIERTEN STATOR**
ELECTRIC MOTOR HAVING A SEGMENTED STATOR
MOTEUR ÉLECTRIQUE COMPORTANT UN STATOR SEGMENTÉ

(30) Priorität: 21.07.2010 DE 102010031584
(43) Veröffentlichungstag der Anmeldung: 29.05.2013
(73) Patentinhaber: Robert Bosch GmbH, 70442 Stuttgart (DE)
(72) Erfinder: GUTMANN, Martin, 79232 March (DE); EWERT, Andreas, 77839 Lichtenau (DE); NOMMENSEN, Bjoern, 31848 Bad Muender (DE); WEIDLICH, Jochen, 76437 Rastatt (DE)
(86) Internationale Anmeldenummer: PCT/EP2011/058449
(87) Internationale Veröffentlichungsnummer: WO 2012/022505

(56) Entgegenhaltungen:
- EP-A1- 1 867 377
- EP-A2- 1 684 399
- WO-A2-2005/101611
- DE-A1-102008 033 601

## Beschreibung

### Stand der Technik

Die vorliegende Erfindung betrifft einen Elektromotor mit einem Rotor und einem Stator, der mindestens ein erstes und ein zweites Statorsegment aufweist, die jeweils zumindest abschnittsweise mit einer Kunststoffummantelung versehen sind.

Mit der EP 1684399 A2 ist ein Stator eines Elektromotors bekannt geworden, der aus einzelnen Statorsegmenten zusammengesetzt ist. Dabei weisen die Statorsegmente Rastzungen auf, die in entsprechenden Rastaussparrungen der benachbarten Statorsegmente einrasten. Danach wird der komplette Stator mit einem Kunstharz umspritzt.

Die WO 2005/101611 A2 beschreibt ebenfalls einzelne Statorsegmente, die mit einem Formschluss in Umfangsrichtung mit ineinander greifen und mittels Rastelementen miteinander fixiert werden.

Auch die DE 102008033601 A1 zeigt einzelne Statorsegmente, die hier mittels eines Halterings und anschließenden Umspritzen mit einer Vergussmasse fest miteinander verbunden werden.

Die DE 198 57 954 A1 beschreibt einen Elektromotor, dessen Stator mehrere, mit Kunststoffummantelungen umspritzte Statorsegmente aufweist. Diese sind ringförmig angeordnet und an in Umfangsrichtung einander zugewandten Fügeflächen über Zahn-Zahnlücken-Verbindungen aneinander befestigt.

Nachteilig an diesem Stand der Technik ist, dass bei einer großen mechanischen Beanspruchung eines derartigen Elektromotors die Zahn-Zahnlücken-Verbindungen zwischen den einzelnen Statorsegmenten sich teilweise oder vollständig lösen können und somit eine einwandfreie Funktionalität des Elektromotors nicht mehr gewährleistet sein kann.

### Offenbarung der Erfindung

Eine Aufgabe der Erfindung ist es daher, einen neuen Elektromotor mit einem segmentierten Stator bereitzustellen, bei dem eine dauerhafte Verbindung zwischen benachbarten Statorsegmenten erreicht werden kann.

Dieses Problem wird gelöst durch einen Elektromotor mit einem Rotor und einem Stator, der mindestens ein erstes und ein zweites Statorsegment aufweist, die jeweils zumindest abschnittsweise mit einer Kunststoffummantelung versehen sind. Die Kunststoffummantelungen des ersten und zweiten Statorsegments sind über mindestens ein Kunststoff-Verbindungsglied miteinander verbunden, das zumindest mit der Kunststoffummantelung des zweiten Statorsegments verschweißt ist.

Die Erfindung ermöglicht somit die Bereitstellung eines Elektromotors mit einem segmentierten Stator, bei dem benachbarte Statorsegmente stabil und zuverlässig aneinander befestigt sind.

Gemäß einer Ausführungsform ist das Kunststoff-Verbindungsglied laschenförmig ausgebildet.

Somit kann ein einfaches und kostengünstiges Verbindungsglied bereitgestellt werden.

Die Kunststoffummantelung des ersten Statorsegments und das Kunststoff-Verbindungsglied sind bevorzugt einstückig ausgebildet.

Somit wird auf einfache Art und Weise eine sichere und dauerhafte Verbindung zwischen dem Verbindungsglied und der Kunststoffummantelung des ersten Statorsegments ermöglicht.

Gemäß einer Ausführungsform ist das Kunststoff-Verbindungsglied mit der Kunststoffummantelung des ersten Statorsegments verschweißt.

Die Erfindung ermöglicht somit die Bereitstellung eines kostengünstigen, separaten Verbindungsglieds, dass sicher und zuverlässig mit den Kunststoffummantelungen des ersten und zweiten Statorsegments verbunden ist.

Das Kunststoff-Verbindungsglied ist bevorzugt ringförmig ausgebildet.

Somit kann ein einfaches und stabiles Verbindungsglied bereitgestellt werden.

Gemäß einer Ausführungsform ist das Kunststoff-Verbindungsglied durch Ultraschallschweißen mit dem zweiten und/oder ersten Statorsegment verbunden.

Somit kann das Verbindungsglied vergleichsweise schnell und zuverlässig mit dem ersten und/oder zweiten Statorsegment verschweißt werden.

Die Kunststoffummantelungen des ersten und zweiten Statorsegments und das Kunststoff-Verbindungsglied weisen bevorzugt einen thermoplastischen Kunststoff auf.

Somit kann ein problemloses und sicheres Verschweißen des Verbindungsglieds mit der oder den Kunststoffummantelungen ermöglicht werden.

Gemäß einer Ausführungsform umschließen die Kunststoffummantelungen mindestens jeweils einen Jochabschnitt und/oder einen Zahnfußabschnitt des ersten und zweiten Statorsegments zumindest abschnittsweise.

Die Erfindung ermöglicht somit eine stabile und zuverlässige Fixierung der Kunststoffummantelungen an den Statorsegmenten.

Das Kunststoff-Verbindungsglied ist bevorzugt im Bereich der Jochabschnitte angeordnet. Das Kunststoff-Verbindungsglied kann ebenfalls im Bereich der Zahnfußabschnitte angeordnet sein.

Somit kann die Verbindung der Statorsegmente an leicht zugänglichen Positionen des segmentierten Stators ermöglicht werden.

Das Eingangs genannte Problem wird auch gelöst durch ein Statorsegment für einen Stator eines Elektromotors, das zumindest abschnittsweise mit einer Kunststoffummantelung versehen ist. An der Kunststoffummantelung ist ein Kunststoff-Verbindungsglied zur Verschweißung mit einer Kunststoffummantelung eines anderen Statorsegments vorgesehen.

Die Erfindung ermöglicht somit eine stabile und zuverlässige Verbindung des Statorsegments mit einem anderen Statorsegment.

Gemäß einer Ausführungsform ist an dem Kunststoff-Verbindungsglied mindestens ein Energierichtungsgeber ausgebildet.

Somit kann bei einem Schweißvorgang eine präzise Energieabgabe im Bereich des Kunststoff-Verbindungsglieds erreicht werden, die eine definierte und kontrollierte Schmelzeerzeugung in diesem Bereich ermöglicht.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht eines Elektromotors gemäß einer Ausführungsform,
Fig. 2 eine Draufsicht auf ein segmentiertes Blechpaket gemäß einer Ausführungsform, mit dem der Statorkern von Fig. 1 realisierbar ist,
Fig. 3 eine perspektivische Ansicht eines einzelnen Kernsegments gemäß einer Ausführungsform,
Fig. 4 eine perspektivische Ansicht des mit einer Einzelwicklung versehenen Kernsegments von Fig. 3, das eine Kunststoffummantelung aufweist, an der laschenförmige Kunststoff-Verbindungsglieder ausgebildet sind,
Fig. 5 eine Draufsicht auf eine erste Anordnung mit einer Vielzahl von Statorsegmenten, mit der der Stator von Fig. 1 realisierbar ist, und
Fig. 6 eine Draufsicht auf eine zweite Anordnung mit einer Vielzahl von Statorsegmenten, mit der der Stator von Fig. 1 realisierbar ist.

### Beschreibung der Ausführungsbeispiele

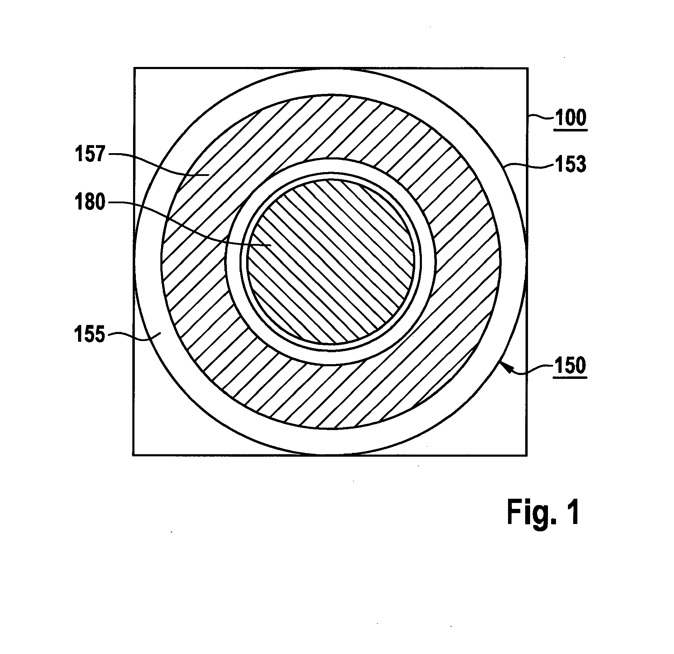

Fig. 1 zeigt einen beispielhaft als Innenläufermotor ausgebildeten Elektromotor 100 mit einem segmentierten Außenstator 150 und einem Innenrotor 180. Der segmentierte Außenstator 150 weist illustrativ einen mit einer Kunststoffummantelung 155 versehenen, segmentierten Statorkern 153 auf, an dem eine Statorwicklung 157 angeordnet ist.

Es wird darauf hingewiesen, dass der Elektromotor 100 in Fig. 1 nur schematisch dargestellt ist, da Aufbau und Funktionalität eines geeigneten Elektromotors hinreichend aus dem Stand der Technik bekannt sind, sodass hier zwecks Knappheit und Einfachheit der Beschreibung auf eine eingehende Beschreibung des Elektromotors 100 verzichtet wird. Des Weiteren wird darauf hingewiesen, dass der Elektromotor 100 lediglich beispielhaft und nicht zur Einschränkung der Erfindung als Innenläufermotor dargestellt ist. Diese kann vielmehr bei allen Motortypen mit segmentierten Statoren Anwendung finden. Darüber hinaus wird darauf hingewiesen, dass auch die Abbildung eines Außenstators lediglich beispielhaften Charakter hat und die Erfindung ebenso z. B. bei ringförmigen Innenstatoren oder Primärteilen von Linearmotoren Anwendung finden kann.

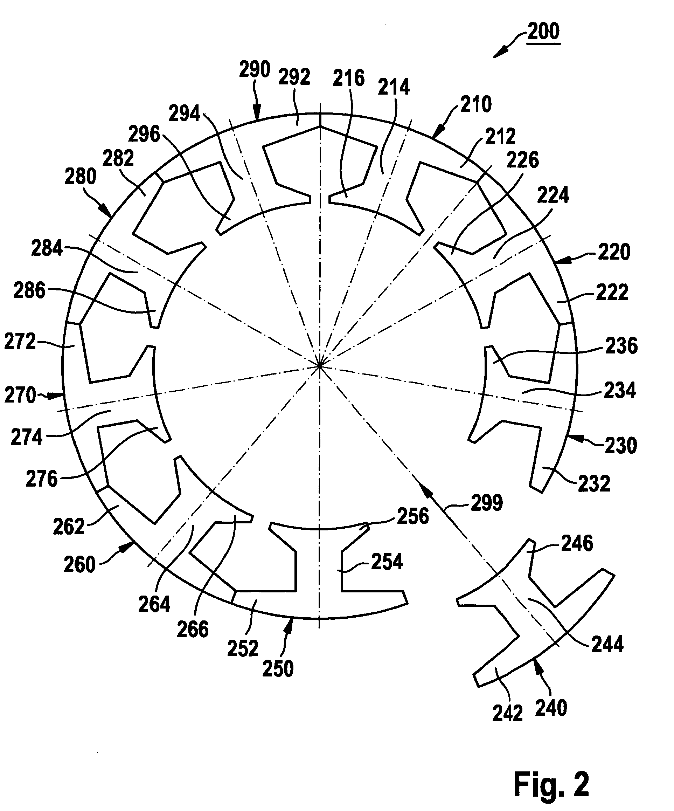

Fig. 2 zeigt eine beispielhafte Anordnung 200 mit einer Vielzahl von im Wesentlichen übereinstimmend ausgebildeten Kernsegmenten 210, 220, 230, 240, 250, 260, 270, 280, 290, die gemäß einer Ausführungsform zur Realisierung des segmentierten Statorkerns 153 von Fig. 1 verwendbar sind. Es wird jedoch darauf hingewiesen, dass die dargestellte Verwendung der neun Kernsegmente 210, 220, 230, 240, 250, 260, 270, 280, 290 lediglich beispielhaften Charakter hat und nicht als Einschränkung der Erfindung zu verstehen ist, die bei einer beliebigen Anzahl von Kernsegmenten Anwendung finden kann. Darüber hinaus konnen auch andere Statorkerntopologien Anwendung finden, als die in Fig. 2 gezeigte, z. B. können anstelle der separaten Kernsegmente 210, 220, 230, 240, 250, 260, 270, 280, 290 verkettete Kernsegmente verwendet werden usw.

Die Kernsegmente 210, 220, 230, 240, 250, 260, 270, 280, 290 sind illustrativ T-förmig aus einem weichmagnetischen Material ausgebildet und weisen z. B. eine Vielzahl gestapelter Blechlamellen auf, die bevorzugt aneinander befestigt sind, beispielsweise miteinander verschweißt sind, und von gestanzten Elektroblechen gebildet werden. Jedes Kernsegment 210, 220, 230, 240, 250, 260, 270, 280, 290 hat einen Jochabschnitt 212, 222, 232, 242, 252, 262, 272, 282 bzw. 292, der sich jeweils in einen Zahnabschnitt 214, 224, 234, 244, 254, 264, 274, 284 bzw. 294 verjüngt, der sich seinerseits illustrativ in einen verbreiterten Zahnfußabschnitt 216, 226, 236, 246, 256, 266, 276, 286 bzw. 296 aufweitet. Die Kernsegmente 210, 220, 230, 240, 250, 260, 270, 280, 290 sind derart ausgebildet, dass sie ringförmig zusammenfügbar sind, wie mit einem Pfeil 299 angedeutet, wobei die Jochabschnitte 212, 222, 232, 242, 252, 262, 272, 282, 292 von in Umfangsrichtung benachbarten Kernsegmenten 210, 220, 230, 240, 250, 260, 270, 280 bzw. 290 jeweils gegeneinander anliegen.

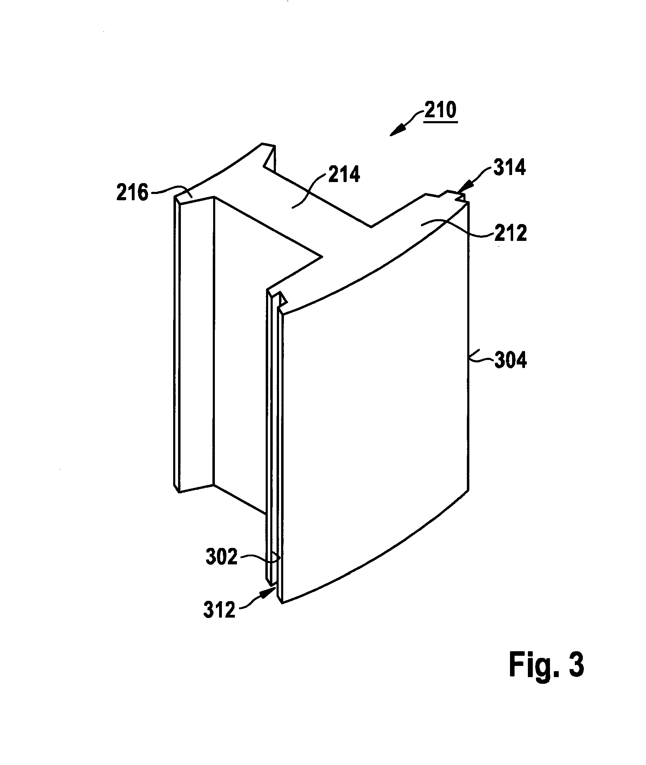

Fig. 3 zeigt das Kernsegment 210 von Fig. 2 zur Verdeutlichung einer Ausführungsform, bei der am Jochabschnitt 212 eine erste laterale Fügefläche 302 mit einer in axialer Richtung ausgebildeten Verbindungsnut 312 versehen ist und an einer zweiten lateralen Fügefläche 304 ein Verbindungssteg 314 in axialer Richtung ausgebildet ist. Die Verbindungsnut 312 und der Verbindungssteg 314 dienen zur Verbindung mit einem Verbindungssteg bzw. einer Verbindungsnut, die jeweils an benachbarten Kernsegmenten vorgesehen sind.

Anders ausgedrückt haben die Kernsegmente 220, 230, 240, 250, 260, 270, 280, 290 von Fig. 2 wie oben beschrieben einen im Wesentlichen mit dem Aufbau des Kernsegments 210 übereinstimmenden Aufbau. Dementsprechend ist der in Fig. 3 beschriebene Aufbau des Kernsegments 210 als repräsentativ für die Kernsegmente 220, 230, 240, 250, 260, 270, 280, 290 zu verstehen, die somit an ihren Jochabschnitten 222, 232, 242, 252, 262, 272, 282, bzw. 292 ebenfalls jeweils eine Verbindungsnut und einen Verbindungssteg aufweisen, die mit zugeordneten Verbindungsstegen bzw. Verbindungsnuten benachbarter Kernsegmente verbunden sind. In der Anordnung 200 von Fig. 2 ist somit die Verbindungsnut 312 des Kernsegments 210 mit einem zugeordneten Verbindungssteg des Kernsegments 220 verbindbar und der Verbindungssteg 314 ist mit einer zugeordneten Verbindungsnut des Kernsegments 290 verbindbar, usw.

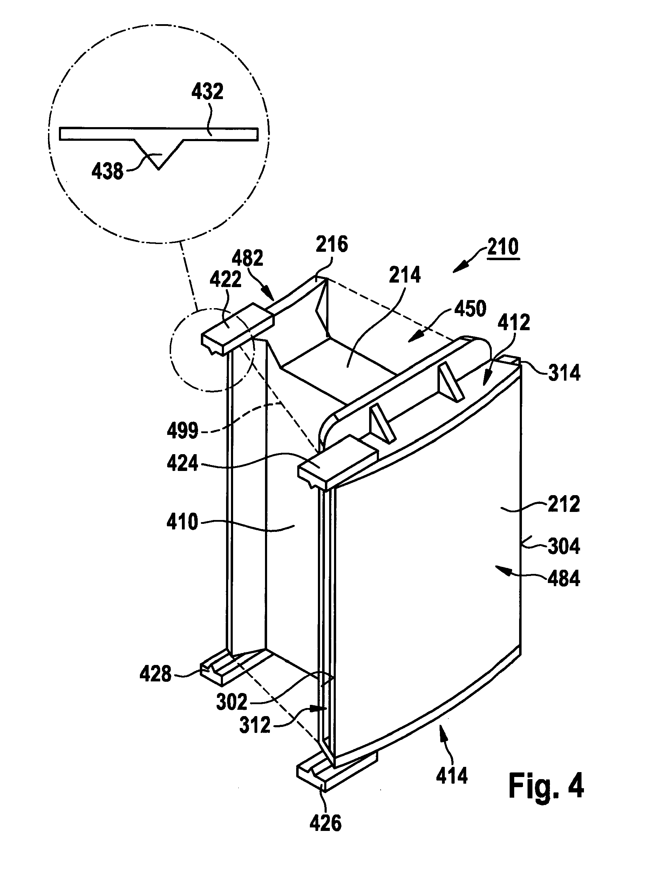

Fig. 4 zeigt das Kernsegment 210 von Fig. 3, das illustrativ mit einer Kunststoffummantelung 410 versehen ist. Gemäß einer Ausführungsform ist die Kunststoffummantelung 410 durch Kunststoffspritzen an dem Kernsegment 210 ausgebildet und umschließt mindestens den Jochabschnitt 212 und den Zahnfußabschnitt 216 zumindest abschnittsweise. Alternativ hierzu kann die Kunststoffummantelung 410 auch aus einem oder mehreren auf das Kernsegment 210 aufsteckbaren Kunststoffteilen ausgebildet werden. Darüber hinaus kann die Kunststoffummantelung 410 zur Fixierung der das Kernsegment 210 ausbildenden, gestapelten Blechlamellen aneinander verwendet werden, sodass auf eine separate Fixierung durch z. B. Verschweißen verzichtet werden kann.

Bevorzugt umschließt die Kunststoffummantelung 410 das Kernsegment 210 vollständig oder zumindest derart, dass lediglich voneinander abgewandte Seitenflächen 482, 484, die am Zahnfußabschnitt 216 bzw. am Jochabschnitt 212 ausgebildet sind, nicht von der Kunststoffummantelung 410 umschlossen sind. Hierbei bildet die Kunststoffummantelung 410 illustrativ eine Wickelnut 450 aus, die zumindest den Zahnabschnitt 214 umschließt und zur Aufnahme einer gestrichelt angedeuteten Einzelwicklung 499 ausgebildet ist, die z. B. durch Flyerwickeln oder Spulenwickeln auf die Kunststoffummantelung 410 aufgewickelt wird, wobei die Kunststoffummantelung 410 die Einzelwicklung 499 bevorzugt gegenüber dem Kernsegment 210 elektrisch isoliert. Nachfolgend wird das mit der Kunststoffummantelung 410 und der Einzelwicklung 499 versehene Kernsegment 210 auch als "Statorsegment" bezeichnet.

Gemäß einer Ausführungsform sind an der Kunststoffummantelung 410 nach Art einer Lasche ausgebildete Kunststoff-Verbindungsglieder 422, 424, 426, 428 befestigt. Diese werden nachfolgend auch als "Verbindungslaschen" bezeichnet und sind illustrativ an einem - in Fig. 4 oberen - axialen Ende 412 oder einem - in Fig. 4 unteren - axialen Ende 414 der Kunststoffummantelung 410 vorgesehen. Z. B. sind die Verbindungslaschen 422, 424, 426, 428 an die Kunststoffummantelung 410 angeformt bzw. einstückig mit dieser ausgebildet oder auf irgendeine geeignete Art und Weise an dieser befestigt, z. B. verschweißt oder verklebt. Die Kunststoffummantelung 410 und die Verbindungslaschen 422, 424, 426, 428 weisen bevorzugt einen thermoplastischen Kunststoff auf.

Die Verbindungslaschen 424, 426 sind illustrativ an den axialen Enden 412 bzw. 414 im Bereich der am Jochabschnitt 212 ausgebildeten ersten lateralen Fügefläche 302 vorgesehen. Die Verbindungslaschen 422, 428 sind auf derselben Seite des Statorsegments 210 an den axialen Enden 412 bzw. 414 im Bereich des Zahnfußabschnitts 216 vorgesehen. Es wird jedoch darauf hingewiesen, dass die Anzahl und Positionierung der Verbindungslaschen 422, 424, 426, 428 lediglich beispielhaften Charakter hat und nicht als Einschränkung der Erfindung zu verstehen ist. Vielmehr kann eine beliebige Anzahl von Verbindungslaschen Anwendung finden, die z. B. ausschließlich im Bereich des Jochabschnitts 212 oder im Bereich des Zahnfußabschnitts 216 und/oder ausschließlich am axialen Ende 412 oder am axialen Ende 414 der Kunststoffummantelung 410 vorgesehen sind.

Gemäß einer Ausführungsform weisen die Verbindungslaschen 422, 424, 426, 428 einen im Wesentlichen übereinstimmenden Aufbau auf, mit einem band- oder laschenartigen Abschnitt 432, an dem optional ein Energierichtungsgeber 438 ausgebildet sein kann. Dieser kann länglich oder punktförmig ausgebildet sein und ist an den Verbindungslaschen 422 und 428 bzw. 424 und 426 jeweils auf einander zugewandten Seiten ausgebildet.

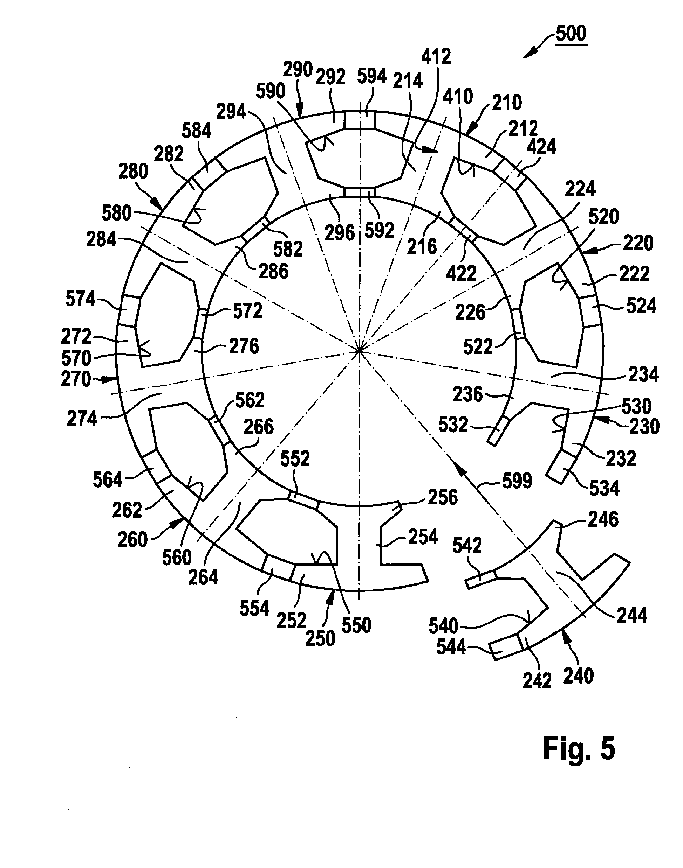

Fig. 5 zeigt eine beispielhafte Anordnung 500, mit der der segmentierte Auβenstator 150 von Fig. 1 realisierbar ist. In der Anordnung 500 sind das Statorsegment 210 von Fig. 4 und die Kernsegmente 220, 230, 240, 250, 260, 270, 280, 290 von Fig. 2 ringförmig angeordnet.

Gemäß einer Ausführungsform weisen die Kernsegmente 220, 230, 240, 250, 260, 270, 280, 290 einen Aufbau auf, der mit dem in Fig. 4 gezeigten Aufbau des Statorsegments 210 im Wesentlichen übereinstimmt, d. h. sie sind jeweils mit einer entsprechenden Kunststoffummantelung 520, 530, 540, 550, 560, 570, 580 bzw. 590 versehen, die ähnlich wie die Kunststoffummantelung 410 von Fig. 4 ausgebildet ist. An diesen sind jeweils Verbindungslaschen 522, 524, 532, 534, 542, 544, 552, 554, 562, 564, 572, 574, 582, 584, bzw. 592 und 594 vorgesehen, die ähnlich wie die Verbindungslasche 422 von Fig. 4 ausgebildet sind. Darüber hinaus ist auf jede der Kunststoffummantelungen 520, 530, 540, 550, 560, 570, 580, 590 eine der Einzelwicklung 499 von Fig. 4 entsprechende Einzelwicklung aufgewickelt, sodass die derart ausgestatteten Kernsegmente 220, 230, 240, 250, 260, 270, 280, 290 nachfolgend auch als "Statorsegmente" bezeichnet werden. Die Einzelwicklungen realisieren mit der Einzelwicklung 499 von Fig. 4 z. B. die Statorwicklung 157 von Fig. 1. Allerdings wurde in Fig. 5 zwecks Einfachheit und Übersichtlichkeit der Abbildung auf deren Darstellung verzichtet.

Es wird jedoch darauf hingewiesen, dass in Fig. 5 lediglich die am dem oberen axialen Ende 412 des Statorsegments 210 entsprechenden, oberen axialen Ende der Statorsegmente 520, 530, 540, 550, 560, 570, 580, 590 vorgesehenen Verbindungslaschen 522, 524, 532, 534, 542, 544, 552, 554, 562, 564, 572, 574, 582, 584, bzw. 592 und 594 sichtbar sind. Am gegenüberliegenden axialen Ende, dass dem unteren axialen Ende 414 des Statorsegments 210 in Fig. 4 entspricht, sind bevorzugt ebenfalls entsprechende Verbindungslaschen ausgebildet.

Fig. 5 illustriert eine Montage der Anordnung 500, bei der die Statorsegmente 210, 220, 230, 240, 250, 260, 270, 280, 290 ringförmig angeordnet werden, wie mit einem Pfeil 599 angedeutet. Die derart ringförmig angeordneten Statorsegmente 210, 220, 230, 240, 250, 260, 270, 280, 290 können zur Vereinfachung nachfolgender Prozessschritte mechanisch vorfixiert werden, z. B. über geeignete Eisen- oder Kunststoffteile, über in den Kunststoffummantelungen 410, 520, 530, 540, 550, 560, 570, 580, 590 ausgebildete Verbindungsnute und -stege (z. B. Nut 312 und Steg 314 von Fig. 4), oder durch die zur Statorwicklung 157 von Fig. 1 verbundenen Einzelwicklungen.

Dann werden die an den Kunststoffummantelungen 410, 520, 530, 540, 550, 560, 570, 580, 590 der Statorsegmente 210, 220, 230, 240, 250, 260, 270, 280 bzw. 290 vorgesehenen Verbindungslaschen 422, 424, 522, 524, 532, 534, 542, 544, 552, 554, 562, 564, 572, 574, 582, 584, bzw. 592 und 594 an den Kunststoffummantelungen 520, 530, 540, 550, 560, 570, 580, 590 bzw. 410 jeweils benachbarter Statorsegmente 220, 230, 240, 250, 260, 270, 280, 290 bzw. 210 befestigt. Diese Befestigung erfolgt bevorzugt mittels Verschweißen, z. B. Ultraschallschweißen oder einem alternativen Kunststoff-Fügeverfahren, beispielsweise Laser-Kunststoffschweißen. Hierbei werden gemäß einer Ausführungsform die zugeordneten Energierichtungsgeber (438 in Fig. 4) abgeschmolzen, sodass die Verbindungslaschen 422, 424, 522, 524, 532, 534, 542, 544, 552, 554, 562, 564, 572, 574, 582, 584, 592, 594 durch ein Abschmelzen der Energierichtungsgeber (438 in Fig. 4) unter gleichzeitigem Aufschmelzen der jeweils angrenzenden Kunststoffummantelungen 520, 530, 540, 550, 560, 570, 580, 590 bzw. 410 mit den entsprechenden Kunststoffummantelungen 520, 530, 540, 550, 560, 570, 580, 590 bzw. 410 im Bereich der Verbindungslaschen 422, 424, 522, 524, 532, 534, 542, 544, 552, 554, 562, 564, 572, 574, 582, 584 bzw. 592 und 594 miteinander verbunden bzw. verschweißt werden.

Es wird jedoch darauf hingewiesen, dass die Befestigung der Verbindungslaschen 422, 424, 522, 524, 532, 534, 542, 544, 552, 554, 562, 564, 572, 574, 582, 584, bzw. 592 und 594 an den Kunststoffummantelungen 520, 530, 540, 550, 560, 570, 580, 590 bzw. 410 jeweils benachbarter Statorsegmente 220, 230, 240, 250, 260, 270, 280, 290 bzw. 210 mittels Verschweißen als erfindungsgemäße Ausführungsform beschrieben ist. Darüber hinaus hat auch die oben beschriebene Verwendung der Energierichtungsgeber (438 von Fig. 4) lediglich beispielhaften Charakter und ist nicht als Einschränkung der Erfindung zu verstehen, die ebenfalls ohne die Verwendung derartiger Energierichtungsgeber ausführbar ist. Beispielsweise kann beim Verschweißen jeweils ein geeignetes, aufschmelzendes Zusatzmaterial zur Schmelzeerzeugung Anwendung finden. Allerdings ist die Verwendung der Energierichtungsgeber vorteilhaft, um eine verbesserte Schmelzeerzeugung bei der Verschweißung zu erreichen.

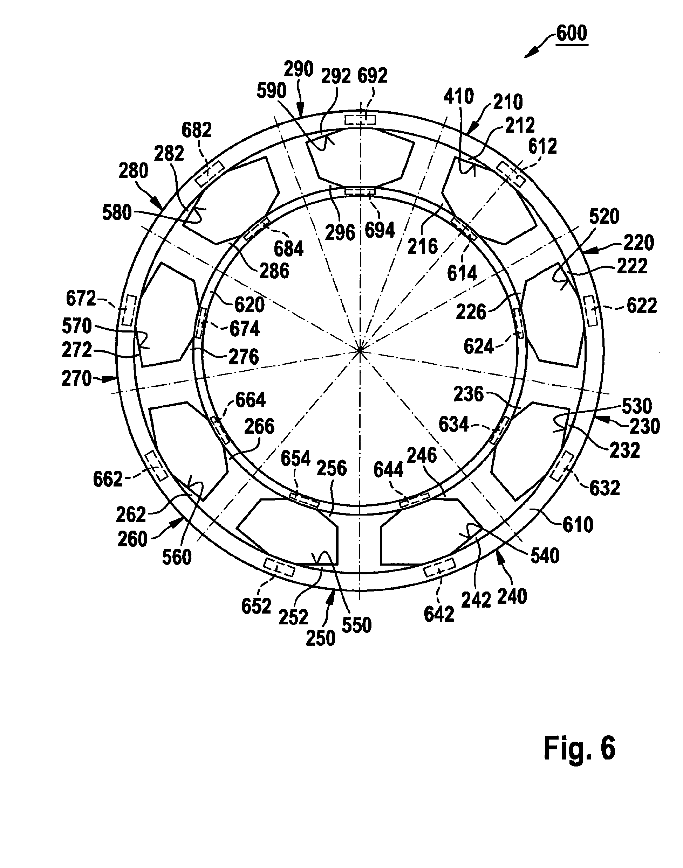

Fig. 6 zeigt eine alternative Anordnung 600, mit der der segmentierte Außenstator 150 von Fig. 1 ebenfalls realisierbar ist. Bei der Anordnung 600 sind im Gegensatz zur Anordnung 500 von Fig. 5 die Kunststoffummantelungen 410, 510, 520, 530, 540, 550, 560, 570, 580, 590 der Statorsegmente 210, 220, 230, 240, 250, 260, 270, 280 bzw. 290 ohne die Verbindungslaschen 422, 424, 522, 524, 532, 534, 542, 544, 552, 554, 562, 564, 572, 574, 582, 584, 592, 594 von Fig. 5 ausgebildet. Stattdessen finden illustrativ ein oder mehrere ringförmige, bevorzugt aus thermoplastischem Kunststoff ausgebildete Kunststoff-Verbindungsglieder 610, 620 Anwendung, an deren den Statorsegmenten 210, 220, 230, 240, 250, 260, 270, 280, 290 zugewandten Seitenflächen beispielhaft gestrichelt angedeutete Energierichtungsgeber 612, 622, 632, 642, 652, 662, 672, 682, 692 bzw. 614, 624, 634, 644, 654, 664, 674, 684, 694 vorgesehen sind. Es wird jedoch darauf hingewiesen, dass die Verbindungsglieder 610, 620 nur beispielhaft ringförmig ausgebildet sind und auch andere Ausgestaltungen Anwendung finden können, z. B. sternförmige Ausgestaltungen.

Gemäß einer Ausführungsform werden die Statorsegmente 210, 220, 230, 240, 250, 260, 270, 280, 290 zur Befestigung aneinander ringförmig angeordnet und die Verbindungsringe 610, 620 werden derart über den Jochabschnitten 212, 222, 232, 242, 252, 262, 272, 282, 292 bzw. den Zahnfußabschnitten 216, 226, 236, 246, 256, 266, 276, 286, 296 positioniert, dass die Energierichtungsgeber 612, 622, 632, 642, 652, 662, 672, 682, 692 bzw. 614, 624, 634, 644, 654, 664, 674, 684, 694 jeweils etwa im Bereich von Kontaktflächen zwischen benachbarten Kunststoffummantelungen 410, 510, 520, 530, 540, 550, 560, 570, 580, 590 angeordnet sind. Dann werden die Verbindungsringe 610, 620 unter Abschmelzen der Energierichtungsgeber 612, 622, 632, 642, 652, 662, 672, 682, 692 bzw. 614, 624, 634, 644, 654, 664, 674, 684, 694 mittels Ultraschallschweißen oder einem alternativen Kunststoff-Fügeverfahren an den Kunststoffummantelungen 410, 510, 520, 530, 540, 550, 560, 570, 580, 590 verschweißt.

Es wird darauf hingewiesen, dass die Befestigung der Verbindungsringe 610, 620 an den Kunststoffummantelungen 410, 510, 520, 530, 540, 550, 560, 570, 580, 590 mittels Verschweißen als erfindungsgemäße Ausführungsform beschrieben ist. Darüber hinaus wird darauf hingewiesen, dass zur Verbesserung der Festigkeit zwischen den Statorsegmenten 210, 220, 230, 240, 250, 260, 270, 280, 290 z. B. im Anschluss an die bei Fig. 5 und 6 beschriebenen Schweißvorgänge ein weiterer Fixiervorgang erfolgen kann, beispielsweise ein Klebe-, Schrumpf-, Schrumpfklebe- oder Einpressvorgang. Diese sind dem Fachmann geläufig, sodass hier zwecks Knappheit der Beschreibung auf eine eingehende Beschreibung verzichtet wird.

## Patentansprüche

1. Elektromotor (100) mit einem Rotor (180) und einem Stator (150), der mindestens ein erstes und ein zweites Statorsegment (210, 220) aufweist, die jeweils zumindest abschnittsweise mit einer Kunststoffummantelung (410, 520) versehen sind, **dadurch gekennzeichnet, dass** die Kunststoffummantelungen (410, 520) des ersten und zweiten Statorsegments (210, 220) über mindestens ein Kunststoff-Verbindungsglied (422, 424) miteinander verbunden sind, das zumindest mit der Kunststoffummantelung (520) des zweiten Statorsegments (220) verschweißt ist.

2. Elektromotor nach Anspruch 1, **dadurch gekennzeichnet, dass** das Kunststoff-Verbindungsglied (422, 424) laschenförmig ausgebildet ist.

3. Elektromotor nach Anspruch 1 oder 2, **dadurch gekennzeichnet, dass** die Kunststoffummantelung (410) des ersten Statorsegments (210) und das Kunststoff-Verbindungsglied (422, 424) einstückig ausgebildet sind.

4. Elektromotor nach Anspruch 1, **dadurch gekennzeichnet, dass** das Kunststoff-Verbindungsglied (422, 424) mit der Kunststoffummantelung (410) des ersten Statorsegments (210) verschweißt ist.

5. Elektromotor nach Anspruch 4, **dadurch gekennzeichnet, dass** das Kunststoff-Verbindungsglied (610, 620) ringförmig ausgebildet ist.

6. Elektromotor nach einem der vorhergehenden Ansprüche, **dadurch gekennzeichnet, dass** das Kunststoff-Verbindungsglied (422, 424; 610, 620) durch Ultraschallschweißen mit dem zweiten und/oder ersten Statorsegment (220, 210) verbunden ist.

7. Elektromotor nach einem der vorhergehenden Ansprüche, **dadurch gekennzeichnet, dass** die Kunststoffummantelungen (410, 520) des ersten und zweiten Statorsegments (210, 220) und das Kunststoff-Verbindungsglied (422, 424) einen thermoplastischen Kunststoff aufweisen.

8. Elektromotor nach einem der vorhergehenden Ansprüche, **dadurch gekennzeichnet, dass** die Kunststoffummantelungen (410, 520) mindestens jeweils einen Jochabschnitt (212, 222) und/oder einen Zahnfußabschnitt (216, 226) des ersten und zweiten Statorsegments (210, 220) zumindest abschnittsweise umschließen.

9. Elektromotor nach Anspruch 7, **dadurch gekennzeichnet, dass** das Kunststoff-Verbindungsglied (422, 424) im Bereich der Jochabschnitte (212, 222) angeordnet ist.

10. Elektromotor nach Anspruch 7, **dadurch gekennzeichnet, dass** das Kunststoff-Verbindungsglied (422, 424) im Bereich der Zahnfußabschnitte (216, 226) angeordnet ist.

11. Statorsegment (210) für einen Stator (150) eines Elektromotors (100), das zumindest abschnittsweise mit einer Kunststoffummantelung (410) versehen ist, **dadurch gekennzeichnet, dass** an der Kunststoffummantelung (410) ein Kunststoff-Verbindungsglied (422, 424) zur Verschweißung mit einer Kunststoffummantelung (520) eines anderen Statorsegments (220) vorgesehen ist.

12. Statorsegment nach Anspruch 11, **dadurch gekennzeichnet, dass** an dem Kunststoff-Verbindungsglied (410) mindestens ein Energierichtungsgeber (432) ausgebildet ist.

## Claims

1. Electric motor (100) having a rotor (180) and a stator (150), which has at least a first and a second stator segment (210, 220), which are each provided, at least sectionally, with a plastics sheath (410, 520), **characterized in that** the plastics sheaths (410, 520) of the first and second stator segments (210, 220) are connected to one another via at least one plastics connecting element (422, 424), which is welded at least to the plastics sheath (520) of the second stator segment (220).

2. Electric motor according to Claim 1, **characterized in that** the plastics connecting element (422, 424) is in the form of a lug.

3. Electric motor according to Claim 1 or 2, **characterized in that** the plastics sheath (410) of the first stator segment (210) and the plastics connecting element (422, 424) are formed integrally.

4. Electric motor according to Claim 1, **characterized in that** the plastics connecting element (422, 424) is welded to the plastics sheath (410) of the first stator segment (210).

5. Electric motor according to Claim 4, **characterized in that** the plastics connecting element (610, 620) is in the form of a ring.

6. Electric motor according to one of the preceding claims, **characterized in that** the plastics connecting element (422, 424; 610, 620) is connected to the second and/or first stator segment (220, 210) by means of ultrasound welding.

7. Electric motor according to one of the preceding claims, **characterized in that** the plastics sheaths (410, 520) of the first and second stator segments (210, 220) and the plastics connecting element (422, 424) have a thermoplastic plastic.

8. Electric motor according to one of the preceding claims, **characterized in that** the plastics sheaths (410, 520) at least sectionally enclose at least in each case one yoke section (212, 222) and/or a tooth base section (216, 226) of the first and second stator segments (210, 220).

9. Electric motor according to Claim 7, **characterized in that** the plastics connecting element (422, 424) is arranged in the region of the yoke sections (212, 222).

10. Electric motor according to Claim 7, **characterized in that** the plastics connecting element (422, 424) is arranged in the region of the tooth base sections (216, 226).

11. Stator segment (210) for a stator (150) of an electric motor (100), which stator segment is provided, at least sectionally, with a plastics sheath (410), **characterized in that** a plastics connecting element (422, 424) is provided on the plastics sheath (410) for welding to a plastics sheath (520) of another stator segment (220).

12. Stator segment according to Claim 11, **characterized in that** at least one energy direction transmitter (432) is formed on the plastics connecting element (410).

## Revendications

1. Moteur électrique (100) comprenant un rotor (180) et un stator (150), qui présente au moins un premier et un deuxième segment statorique (210, 220), qui sont à chaque fois pourvus au moins en partie d'une enveloppe en plastique (410, 520), **caractérisé en ce que** les enveloppes en plastique (410, 520) du premier et du deuxième segment statorique (210, 220) sont connectées l'une à l'autre par le biais d'au moins un organe de connexion en plastique (422, 424) qui est soudé au moins à l'enveloppe en plastique (520) du deuxième segment statorique (220).

2. Moteur électrique selon la revendication 1, **caractérisé en ce que** l'organe de connexion en plastique (422, 424) est réalisé en forme de patte.

3. Moteur électrique selon la revendication 1 ou 2, **caractérisé en ce que** l'enveloppe en plastique (410) du premier segment statorique (210) et l'organe de connexion en plastique (422, 424) sont réalisés d'une seule pièce.

4. Moteur électrique selon la revendication 1, **caractérisé en ce que** l'organe de connexion en plastique (422, 424) est soudé à l'enveloppe en plastique (410) du premier segment statorique (210).

5. Moteur électrique selon la revendication 4, **caractérisé en ce que** l'organe de connexion en plastique (610, 620) est réalisé sous forme annulaire.

6. Moteur électrique selon l'une quelconque des revendications précédentes, **caractérisé en ce que** l'organe de connexion en plastique (422, 424 ; 610, 620) est connecté par soudage par ultrasons au deuxième et/ou au premier segment statorique (220, 210).

7. Moteur électrique selon l'une quelconque des revendications précédentes, **caractérisé en ce que** les enveloppes en plastique (410, 520) du premier et du deuxième segment statorique (210, 220) et l'organe de connexion en plastique (422, 424) présentent un plastique thermoplastique.

8. Moteur électrique selon l'une quelconque des revendications précédentes, **caractérisé en ce que** les enveloppes en plastique (410, 520) entourent au moins en partie au moins à chaque fois une portion d'âme (212, 222) et/ou une portion de base de dent (216, 226) du premier et du deuxième segment statorique (210, 220).

9. Moteur électrique selon la revendication 7, **caractérisé en ce que** l'organe de connexion en plastique (422, 424) est disposé dans la région des portions d'âme (212, 222).

10. Moteur électrique selon la revendication 7, **caractérisé en ce que** l'organe de connexion en plastique (422, 424) est disposé dans la région des portions de base de dent (216, 226).

11. Segment statorique (210) pour un stator (150) d'un moteur électrique (100), qui est pourvu au moins en partie d'une enveloppe en plastique (410), **caractérisé en ce qu'**un organe de connexion en plastique (422, 424) est prévu sur l'enveloppe en plastique (410) pour le soudage à une enveloppe en plastique (520) d'un autre segment statorique (220).

12. Segment statorique selon la revendication 11, **caractérisé en ce qu'**au moins un détecteur de direction d'énergie (432) est réalisé sur l'organe de connexion en plastique (410).
